# EUROPÄISCHE PATENTANMELDUNG

(11) **EP 4 782 241 A1**
(43) Veröffentlichungstag der Anmeldung: **29.07.2026**
(21) Anmeldenummer: 25222938.0
(22) Anmeldetag: 12.12.2025
(51) Int. Cl.: B60K 5/00, B60K 11/04, B60K 11/08

(54) **SELBSTFAHRENDER BODENVERDICHTER**

(30) Priorität: 22.01.2025 DE 102025102188
(71) Anmelder: Hamm AG, 95643 Tirschenreuth (DE)
(72) Erfinder: Kreger, Marco, Tirschenreuth (DE); Hopf, Jürgen, Tirschenreuth (DE)
(74) Vertreter: Ruttensperger Lachnit Trossin Gomoll

(57) **Zusammenfassung**

Ein selbstfahrender Bodenverdichter umfasset einen Vorderwagen (14) und einen zum Lenken des Bodenverdichters (10) mit dem Vorderwagen (14) schwenkbar verbundenen, in einer Bodenverdichter-Längsrichtung (L) auf den Vorderwagen (14) folgenden Hinterwagen (16), wobei an dem Vorderwagen (14) ein Antriebsaggregat und ein Kühlsystem (24) vorgesehen sind, wobei das Kühlsystem (24) wenigstens einen von einem zu kühlenden Medium und von Kühlluft (K) durchströmbaren Kühler (30, 32, 34) und ein Kühlluftgebläse (60) umfasst, wobei wenigstens ein Kühler (30, 32, 34) an einer dem Hinterwagen (16) zugewandten Hinterseite (56) des Vorderwagens (14) derart angeordnet ist, dass den wenigstens einen an der dem Hinterwagen (16) zugewandten Hinterseite (56) des Vorderwagens (14) angeordneten Kühler (30, 32, 34) durchströmende Kühlluft (K) aus dem wenigstens einen an der dem Hinterwagen (16) zugewandten Hinterseite (56) des Vorderwagens (14) angeordneten Kühler (30, 32, 34) in Richtung auf den Hinterwagen (16) zu austritt, wobei an einer dem Vorderwagen (14) zugewandten Vorderseite (74) des Hinterwagens (16) wenigstens eine Kühlluft-Aufnahmeöffnung (64) zur Aufnahme der in Richtung auf den Hinterwagen (16) zu austretenden Kühlluft (K) vorgesehen ist, und wobei an einer von dem Vorderwagen (14) im Wesentlichen abgewandten Hinterseite (76) des Hinterwagens (16) wenigstens eine Kühlluft-Abgabeöffnung (78) zur Abgabe der an der wenigstens einen Kühlluft-Aufnahmeöffnung (64) aufgenommenen Kühlluft (K) vorgesehen ist.

## Beschreibung

Die vorliegende Erfindung betrifft einen selbstfahrenden Bodenverdichter.

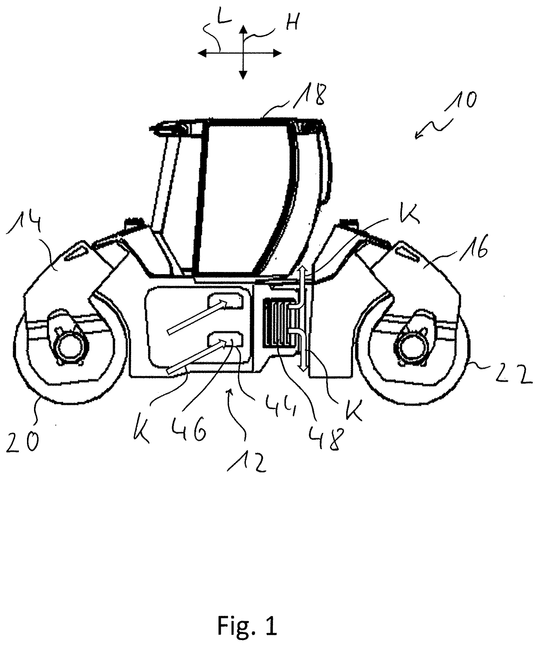

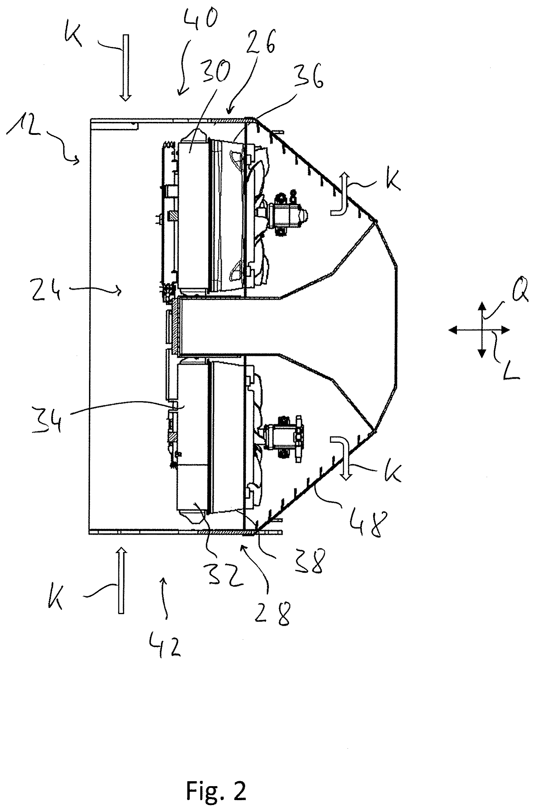

Ein seitens der Hamm AG unter der Typenserie HD+ vertriebener selbstfahrender Bodenverdichter ist in den Fig. 1 und 2 dargestellt. Dieser als so genannte Tandemwalze ausgebildete selbstfahrende Bodenverdichter 10 weist einen Maschinenrahmen 12 mit zwei grundsätzlich in einer Bodenverdichter-Längsrichtung L aufeinanderfolgend angeordneten und für die Zwecke der vorliegenden Erfindung als Vorderwagen 14 und als Hinterwagen 16 bezeichneten Systembereichen auf. Der Vorderwagen 14 und der Hinterwagen 16 sind um einen im Wesentlichen in einer Bodenverdichter-Höhenrichtung H sich erstreckende Lenkachse schwenkbar miteinander verbunden, so dass durch Verschwenken des Vorderwagens 14 und des Hinterwagens 16 bezüglich einander der Bodenverdichter 10 gelenkt werden kann.

Am Vorderwagen 14 ist ein allgemein mit 18 bezeichneter Bedienstand angeordnet, in welchem eine den Bodenverdichter bedienende Bedienperson Platz finden kann. Bei dem in Fig. 1 dargestellten Bodenverdichter 10 ist der Bedienstand 18 so orientiert, dass bei Bewegung in einer Vorwärtsrichtung in der Bodenverdichter-Längsrichtung L, also in Fig. 1 nach links, die Bedienperson auch in diese Richtung blickt. Dies ist eine Bewegungsrichtung des Bodenverdichters, welche dieser beispielsweise bei Überführungsfahrten aufweisen kann. Zum Verdichten von Bodenmaterial, beispielsweise Asphalt, bewegt der Bodenverdichter 10 sich im Allgemeinen in der Bodenverdichter-Längsrichtung L hin und her, so dass eine Bewegungsrichtung in Fig. 1 nach rechts im Allgemeinen als Rückwärtsfahrt bezeichnet wird. Grundsätzlich könnte der Bedienstand 18 auch um 180° gedreht am Maschinenrahmen 12 bzw. am Vorderwagen 14 angeordnet sein, so dass dann eine Bewegungsrichtung des Bodenverdichters in Fig. 1 nach rechts als Vorwärtsfahrtrichtung zu bezeichnen wäre.

Insofern ist erkennbar, dass die in Zuordnung zu den als Vorderwagen 14 und Hinterwagen 16 bezeichneten Systembereichen des Maschinenrahmens 12 gewählten Begrifflichkeiten primär dazu dienen, diese begrifflich voneinander zu unterscheiden, jedoch keine Beschränkung dahingehend einführen, in welcher Richtung ein derartiger Bodenverdichter 10 vornehmlich oder beispielsweise bei Überführungsfahrten bewegt wird.

Am Vorderwagen 14 ist ferner ein in Fig. 1 nicht erkennbares Antriebsaggregat vorgesehen, welches im Allgemeinen eine Diesel-Brennkraftmaschine und bei Ausgestaltung des Bodenverdichters 10 als Hybrid-Maschine auch einen oder mehrere Elektromotoren umfassen kann. Durch ein derartiges Antriebsaggregat kann zumindest eine der beiden Verdichterwalzen 20, 22 zur Drehung angetrieben werden. Auch andere Systembereiche, wie z. B. ein Schwingungserzeugungsmechanismus bzw. ein Hydraulikölkreislauf, durch welchen in dem Bodenverdichter 10 Energie übertragen wird, können durch das Antriebsaggregat betrieben werden.

Um insbesondere im Bereich des Vorderwagens 14 in der Umgebung des Antriebsaggregats entstehende Wärme abzuführen, umfasst der Bodenverdichter 10 ein in Fig. 2 teilweise dargestelltes Kühlsystem 24. Dieses umfasst zwei quer zur Bodenverdichter-Längsrichtung L und somit in einer Bodenverdichter-Querrichtung Q aufeinander folgend angeordnete Kühlerpakete 26, 28 jeweils mit wenigstens einem Kühler 30, 32, 34 und einem zugeordneten Kühlluftgebläse 36, 38. Der Kühler 30 des Kühlerpakets 26 kann beispielsweise ein Kühlflüssigkeit-Kühler sein, durch welchen eine durch eine Diesel-Brennkraftmaschine zirkulierende Kühlflüssigkeit, im Allgemeinen Kühlwasser, gekühlt wird. Der Kühler 32 des Kühlerpakets 28 kann beispielsweise ein Ladeluft-Kühler sein, und der Kühler 34 des Kühlerpakets 28 kann beispielsweise ein Hydrauliköl-Kühler sein, in welchem das in einem Hydraulikölkreislauf zirkulierende Hydrauliköl gekühlt wird.

Durch die den beiden Kühlerpaketen 26, 28 zugeordneten Kühlluftgebläse 36, 38 wird die primär an Seitenbereichen 40, 42 des Vorderwagens 14 aufgenommene Kühlluft K durch die jeweils zugeordneten Kühler 30 bzw. 32, 34 hindurch gesaugt und dann in der Bodenverdichter-Längsrichtung L bzw. seitlich nach außen aus dem Vorderwagen 14 ausgestoßen. Zur Aufnahme der Kühlluft K stromaufwärts der Kühlerpakete 36, 38 können beispielsweise im Bereich von Trittaussparungen 44, welche durch eine Bedienperson zum Erreichen des Bedienstandes 18 genutzt werden können, Kühlluft-Eintrittsöffnungen 46 ausgebildet sein. Zur Abgabe der Kühlluft K stromabwärts der Kühlerpakete 36, 38 sind am Vorderwagen 14 schlitzartige Kühlluft-Abgabeöffnungen 48 vorgesehen. Aus den Kühlluft-Abgabeöffnungen 48 strömt, wie dies die Fig. 1 und 2 andeuten, ein Teil der grundsätzlich in Richtung auf den Hinterwagen 16 zu ausgestoßenen Kühlluft K sich nach Umlenkung am Hinterwagen 16 auch in Richtung nach oben in den Bereich des Bedienstandes 18. Insbesondere dann, wenn eine Tür oder ein Fenster des Bedienstandes 18 geöffnet ist oder der Bedienstand 18 ein grundsätzlich offener Bedienstand ist, kann dies zu einer erheblichen Belastung der Bedienperson durch vergleichsweise warme Abluft führen.

Es ist die Aufgabe der vorliegenden Erfindung, einen selbstfahrenden Bodenverdichter vorzusehen, bei welchem die Belastung für eine Bedienperson durch den Bodenverdichter durchströmende Kühlluft gemindert ist.

Erfindungsgemäß wird diese Aufgabe gelöst durch einen selbstfahrenden Bodenverdichter, umfassend einen Vorderwagen und einen zum Lenken des Bodenverdichters mit dem Vorderwagen schwenkbar verbundenen, in einer Bodenverdichter-Längsrichtung auf den Vorderwagen folgenden Hinterwagen, wobei an dem Vorderwagen ein Antriebsaggregat und ein Kühlsystem vorgesehen sind, wobei das Kühlsystem wenigstens einen von einem zu kühlenden Medium und von Kühlluft durchströmbaren Kühler und ein Kühlluftgebläse umfasst, wobei wenigstens ein Kühler an einer dem Hinterwagen zugewandten Hinterseite des Vorderwagens derart angeordnet ist, dass den wenigstens einen an der dem Hinterwagen zugewandten Hinterseite des Vorderwagens angeordneten Kühler durchströmende Kühlluft aus dem wenigstens einen an der dem Hinterwagen zugewandten Hinterseite des Vorderwagens angeordneten Kühler in Richtung auf den Hinterwagen zu austritt, wobei an einer dem Vorderwagen zugewandten Vorderseite des Hinterwagens wenigstens eine Kühlluft-Aufnahmeöffnung zur Aufnahme der in Richtung auf den Hinterwagen zu austretenden Kühlluft vorgesehen ist, und wobei an einer von dem Vorderwagen im Wesentlichen abgewandten Hinterseite des Hinterwagens wenigstens eine Kühlluft-Abgabeöffnung zur Abgabe der an der wenigstens einen Kühlluft-Aufnahmeöffnung aufgenommenen Kühlluft vorgesehen ist.

Da bei dem erfindungsgemäß aufgebauten selbstfahrenden Bodenverdichter die aus dem Vorderwagen abgegebene, erwärmte Kühlluft nicht gezwungen wird, am Hinterwagen vorbei in die Umgebung zu strömen, sondern in der wenigstens einen am Hinterwagen ausgebildeten Kühlluft-Aufnahmeöffnung aufgenommen und somit aus dem Bereich des Vorderwagens weg geleitet wird, wird eine übermäßige Belastung einer Bedienperson durch in den Bereich eines an dem Bodenverdichter vorgesehenen Bedienstandes strömende Kühlluft bzw. Abluft weitestgehend vermieden. Dazu trägt insbesondere auch bei, dass die Kühlluft den Hinterwagen in Richtung von der Vorderseite zur Hinterseite desselben, also im Wesentlichen in der Bodenverdichter-Längsrichtung, durchströmt und somit beim Durchströmen des Hinterwagens keine zu einer Erhöhung des Strömungswiderstands führende wesentliche Strömungsumlenkung erfolgt, welche ein seitliches Abströmen eines Teils der aus dem Vorderwagen austretenden Kühlluft bereits vor Eintritt in die wenigstens eine Kühlluft-Aufnahmeöffnung zur Folge haben könnte.

Um das definierte Leiten des aus dem Vorderwagen abgegebenen Kühlluftstroms in Richtung zu dem Hinterwagen und durch diesen hindurch zu unterstützen, wird vorgeschlagen, dass der wenigstens eine an der dem Hinterwagen zugewandten Hinterseite des Vorderwagens angeordnete Kühler in einer zur Bodenverdichter-Längsrichtung im Wesentlichen orthogonalen Bodenverdichter-Querrichtung im Wesentlichen zentral am Vorderwagen angeordnet ist. Eine derartige zentrale Positionierung führt ferner dazu, dass im Bereich des Kühlsystems bzw. der verschiedenen Kühler derselben entstehende Geräusche durch seitlich davon positionierte Systembereiche gedämmt werden.

Die Aufnahme des Kühlluftstroms im Hinterwagen kann weiter dadurch unterstützt werden, dass die den wenigstens einen an der dem Hinterwagen zugewandten Hinterseite des Vorderwagens angeordneten Kühler durchströmende Kühlluft im Wesentlichen in der Bodenverdichter-Längsrichtung aus dem wenigstens einen an der dem Hinterwagen zugewandten Hinterseite des Vorderwagens angeordneten Kühler in Richtung auf den Hinterwagen zu austritt.

Eine kompakte und die konzentrierte Zuleitung von Kühlluft zu der wenigstens einen Kühlluft-Aufnahmeöffnung im Hinterwagen unterstützende Bauart kann vorsehen, dass das Kühlsystem eine Mehrzahl von von der Kühlluft durchströmbaren Kühlern umfasst, und dass wenigstens zwei zum Kühlen unterschiedlicher Medien vorgesehene Kühler des Kühlsystems an der dem Hinterwagen zugewandten Hinterseite des Vorderwagens in der Bodenverdichter-Längsrichtung derart aufeinander folgend angeordnet sind, dass die Kühlluft diese Kühler im Wesentlichen in Richtung der Bodenverdichter-Längsachse nacheinander durchströmt.

Beispielsweise können dabei für eine effiziente Kühlung unterschiedlicher zu kühlender Medien die wenigstens zwei zum Kühlen unterschiedlicher Medien vorgesehenen Kühler umfassen:
- einen Kühlflüssigkeit-Kühler zum Kühlen von Antriebsaggregat-Kühlflüssigkeit, oder/und
- einen Öl-Kühler zum Kühlen von Antriebsaggregat-Öl, oder/und
- einen Ladeluft-Kühler zum Kühlen von Antriebsaggregat-Ladeluft, oder/und
- einen Hydrauliköl-Kühler zum Kühlen von Hydrauliköl; oder/und
- einen Kraftstoff-Kühler zum Kühlen von Antriebsaggregat-Kraftstoff.

Zur Erzeugung des Kühlluftstroms kann das Kühlsystem ein, in der Bodenverdichter-Längsrichtung auf den wenigstens einen an der dem Hinterwagen zugewandten Hinterseite des Vorderwagens angeordneten Kühler folgend, stromaufwärts des wenigstens einen an der dem Hinterwagen zugewandten Hinterseite des Vorderwagens angeordneten Kühlers angeordnetes Kühlluftgebläse umfassen.

Wenn das Kühlluftgebläse stromaufwärts der wenigstens zwei zum Kühlen unterschiedlicher Medien vorgesehenen, an der dem Hinterwagen zugewandten Hinterseite des Vorderwagens in der Bodenverdichter-Längsrichtung aufeinander folgend angeordneten Kühler angeordnet ist, kann der durch diese Mehrzahl von Kühlen hindurchgeleitete Kühlluftstrom durch ein einziges Kühlluftgebläse erzeugt werden. Dies führt zu einer kostengünstigen, kompakten Bauart und aufgrund der geringeren Anzahl an eingesetzten Gebläsen auch einer geringen akustischen Belastung.

An dem Hinterwagen kann ein Flüssigkeitstank, beispielsweise Wassertank, vorgesehen sein. Dabei ist dann vorzugsweise vorgesehen, dass:
- der Flüssigkeitstank die wenigstens eine Kühlluft-Aufnahmeöffnung in einer zur Bodenverdichter-Längsrichtung im Wesentlichen orthogonalen Bodenverdichter-Höhenrichtung oder/und in wenigstens einer Richtung, vorzugsweise beiden Richtungen, in der Bodenverdichter-Querrichtung wenigstens bereichsweise begrenzt,
   oder/und
- der Flüssigkeitstank die wenigstens eine Kühlluft-Abgabeöffnung in der Bodenverdichter-Höhenrichtung oder/und in wenigstens einer Richtung, vorzugsweise beiden Richtungen, in der Bodenverdichter-Querrichtung wenigstens bereichsweise begrenzt.

Der Flüssigkeitstank bildet somit auch eine Komponente, welche die definierte Strömungsführung der Kühlluft in den bzw. durch den Hinterwagen hindurch unterstützt. Auf zusätzliche Gehäusekomponenten kann somit verzichtet werden.

Zur definierten Strömungsführung durch den Hinterwagen hindurch kann an dem Hinterwagen ein von der wenigstens einen Kühlluft-Aufnahmeöffnung zu der wenigstens einen Kühlluft-Abgabeöffnung führender Kühlluft-Strömungskanal vorgesehen sein, und der Flüssigkeitstank kann den Kühlluft-Strömungskanal in der Bodenverdichter-Höhenrichtung oder/und in wenigstens einer Richtung, vorzugsweise beiden Richtungen, in der Bodenverdichter-Querrichtung wenigstens bereichsweise begrenzen.

Ferner kann an dem Hinterwagen eine Verdichterwalze um eine zur Bodenverdichter-Längsrichtung im Wesentlichen orthogonale Walzendrehachse drehbar angeordnet sein, wobei an dem Hinterwagen eine in Umfangsrichtung um die Walzendrehachse sich entlang eines Teils eines Außenumfangs der Verdichterwalze und sich in Richtung der Walzendrehachse erstreckende, einen Walzenaufnahmeraum umgrenzende Walzenverkleidung vorgesehen ist, wobei die Walzenverkleidung den Kühlluft-Strömungskanal in Richtung auf die Verdichterwalze zu begrenzt.

Es ist in diesem Zusammenhang darauf hinzuweisen, dass eine derartige Verdichterwalze als in Richtung der Walzendrehachse durchlaufende Walze, als geteilte Walze oder auch als eine Mehrzahl von in Richtung der Walzendrehachse aufeinander folgend positionierte Gummiräder ausgebildet sein kann.

Zur Aufnahme der Kühlluft in dem Vorderwagen können an dem Vorderwagen an im Wesentlichen quer zur Bodenverdichter-Längsrichtung orientierten Seitenrandbereichen Kühlluft-Eintrittsöffnungen vorgesehen sein.

Ferner kann an dem Vorderwagen ein Bedienstand vorgesehen sein, von welchem aus eine Bedienperson den Bodenverdichter steuern bzw. bedienen kann.

Für eine kompakte Bauart kann vorgesehen sein, dass der Bedienstand den wenigstens einen an der dem Hinterwagen zugewandten Hinterseite des Vorderwagens angeordneten Kühler in der Bodenverdichter-Längsrichtung wenigstens bereichsweise überlappt.

Wenigstens ein Teil der Kühlluft-Eintrittsöffnungen kann im Bereich von zu dem Bedienstand führenden Trittaussparungen vorgesehen sein.
- Fig. 1: eine Seitenansicht eines aus dem Stand der Technik bekannten selbstfahrenden Bodenverdichters;
- Fig. 2: eine Draufsicht auf den unter einem Bedienstand des Bodenverdichters der Fig. 1 liegenden Bereich eines Vorderwagens des Bodenverdichters;
- Fig. 3: eine perspektivische Ansicht eines Teils einer Vorderwagen-Hinterwagen-Baugruppe eines erfindungsgemäß aufgebauten Bodenverdichters;
- Fig. 4: eine teilweise aufgeschnitten dargestellte Seitenansicht der Vorderwagen-Hinterwagen-Baugruppe in der Fig. 3.

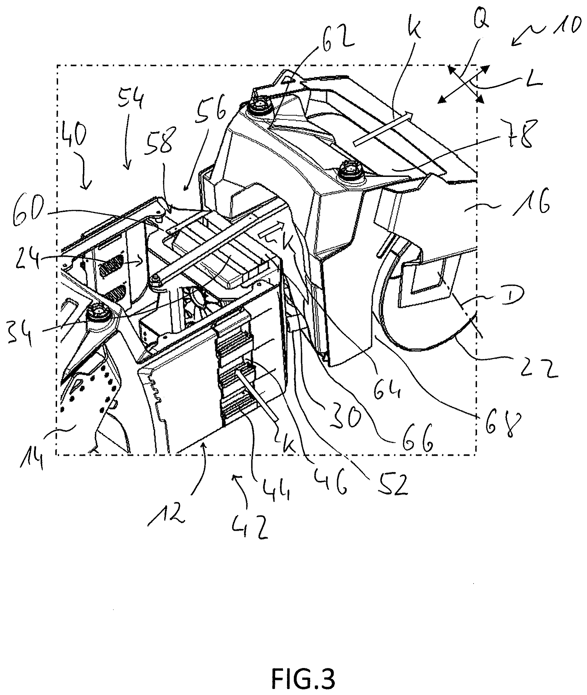

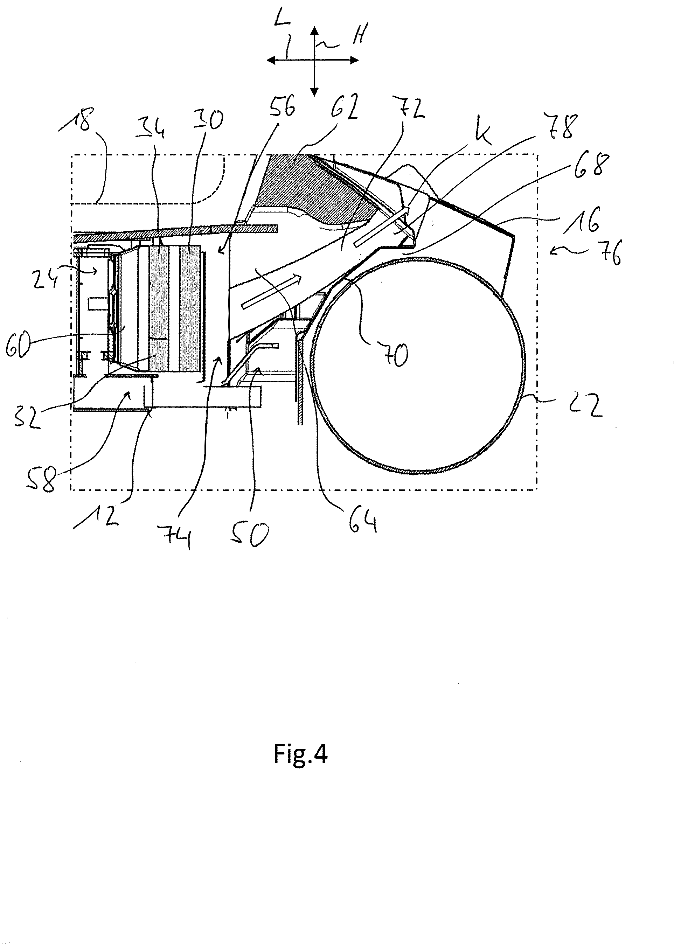

Bevor nachfolgend mit Bezug auf die Fig. 3 und 4 der Aufbau eines erfindungsgemäßen Bodenverdichters 10 detailliert beschrieben wird, ist darauf hinzuweisen, dass dieser hinsichtlich seiner Grundstruktur so aufgebaut sein kann, wie dies in Fig. 1 zu erkennen ist. Der erfindungsgemäß aufgebaute Bodenverdichter 10 kann also gleichermaßen einen Maschinenrahmen 12 mit einem Vorderwagen 14 und einem Hinterwagen 16 umfassen, wobei am Vorderwagen 14 ein Antriebsaggregat und ein Bedienstand 18 sowie beispielsweise eine zur Drehung antreibbare Verdichterwalze 20 vorgesehen sein können, während an dem zum Lenken des Bodenverdichters 10 bezüglich des Vorderwagens 14 verschwenkbaren Hinterwagen 16 eine weitere Verdichterwalze 22 vorgesehen sein kann.

Auch mit Bezug auf den erfindungsgemäß aufgebauten Bodenverdichter 10 ist zu betonen, dass die Begrifflichkeiten "Vorderwagen" und "Hinterwagen" bzw. "vorne" und "hinten" lediglich zur Differenzierung verschiedener Systembereiche des Bodenverdichters 10 und verschiedener Richtungen bzw. Orientierungen dienen und keine Beschränkung dahingehend darstellen, in welcher Richtung ein derartiger Bodenverdichter 10 insbesondere zur Durchführung von Verdichtungsvorgängen zu bewegen ist.

Die Fig. 3 zeigt in ihrem linken Bereich den im Wesentlichen von dem Bedienstand 18 überdeckten Bereich des Vorderwagens 14. Zu erkennen sind die Trittaussparungen 44, die an beiden Seiten 40, 42 des Bodenverdichters vorgesehen sein können, um einer Bedienperson das Erreichen des über diesem Bereich des Vorderwagens 14 positionierten Bedienstandes 18 zu ermöglichen. Über einen in Fig. 4 prinzipiell angedeuteten Schwenkmechanismus 50 und in Fig. 3 zu erkennende Kolben/Zylinder-Einheiten 52 können der Vorderwagen 14 und der Hinterwagen 16 zum Lenken des Bodenverdichters 10 um eine im Wesentlichen in der Bodenverdichter-Höhenrichtung H sich erstreckende Schwenkachse bezüglich einander verschwenkt werden.

An einem dem Hinterwagen 14 nahe liegenden Endbereich 54 des Vorderwagens 14 ist ein wesentlicher Systembereich des Kühlsystems 24 des Bodenverdichters 10 angeordnet. Insbesondere umfasst das Kühlsystem 24 an einer dem Hinterwagen 16 zugewandten Hinterseite 56 des Vorderwagens 14 ein Kühlerpaket 58 mit mehreren in der Bodenverdichter-Längsrichtung L aufeinander folgenden und von Kühlluft K nacheinander durchströmbaren Kühlern 30, 32, 34. In dem Kühlerpaket 58 können in der Kühlluftströmungsrichtung stromaufwärts und nebeneinander der als Ladeluft-Kühler ausgebildete Kühler 32 und der als Hydrauliköl-Kühler ausgebildete Kühler 34 und stromabwärts davon der als Kühlflüssigkeit-Kühler ausgebildete Kühler 30 angeordnet sein. Zwischen bzw. stromaufwärts oder stromabwärts dieser in der Bodenverdichter-Längsrichtung L aufeinander folgend und in der Bodenverdichter-Querrichtung Q im Wesentlichen zentral am Vorderwagen 14 positionierten Kühler 30, 32 bzw. 34 kann bei Bedarf beispielsweise zumindest ein weiterer Kühler angeordnet sein, der einen Kraftstoff-Kühler zum Kühlen des Dieselkraftstoffs bereitstellen kann. Auch ein Öl-Kühler zum Kühlen des Antriebsaggregat-Öls der Diesel-Brennkraftmaschine des Antriebsaggregats kann in dem Kühlerpaket 58 von in der Bodenverdichter-Längsrichtung L aufeinander folgend angeordneten und somit seriell von der Kühlluft K durchströmbaren Kühlern vorgesehen sein. Von Bedeutung ist, dass Kühler, welche zum Kühlen thermisch relevanterer bzw. kritischerer Medien genutzt werden, im Kühlluftstrom weiter stromaufwärts liegen, als Kühler, die thermisch weniger kritische Medien kühlen sollen.

Stromaufwärts des Kühlerpakets 58 ist ein einziges Kühlluftgebläse 60 vorgesehen, welches die Kühlluft K unter anderem über die im Bereich der Trittaussparungen 44 ausgebildeten Kühlluft-Eintrittsöffnungen 46 ansaugt und dann in Form von Druckluft durch die aufeinander folgend angeordneten Kühler 32, 34, 30 hindurch fördert. Da nur ein einziges Kühlluftgebläse 60 eingesetzt wird, werden nicht nur Bauraum und Kosten eingespart, sondern die im Betrieb des Bodenverdichters 10 durch das Fördern von Kühlluft K entstehende akustische Belastung kann dadurch auch reduziert werden.

Wie in den Fig. 3 und 4 durch Strömungspfeile angedeutet, strömt die an der Hinterseite 56 des Vorderwagens 14 im Wesentlichen in der Bodenverdichter-Längsrichtung L ausgestoßene Kühlluft K auf eine im Hinterwagen 16 ausgebildete Kühlluft-Aufnahmeöffnung 64 zu. Diese ist derart dimensioniert und positioniert, dass sie im Wesentlichen den gesamten aus dem Vorderwagen 14 bzw. dem Kühlerpaket 58 austretenden Kühlluftstrom aufnehmen kann, so dass im Wesentlichen keine den Vorderwagen 14 verlassende, erwärmte Kühlluft K seitlich am Hinterwagen 16 vorbeiströmt.

Am Hinterwagen 16 ist ein bei Betrachtung in der Bodenverdichter-Längsrichtung L im Wesentlichen U-förmig ausgebildeter Flüssigkeitstank 62 vorgesehen. In diesem Flüssigkeitstank 62 kann beispielsweise ein Additiv enthaltendes Wasser aufgenommen werden, welches im Verdichtungsbetrieb auf die am Hinterwagen 16 vorgesehene Verdichterwalze 20 aufgesprüht werden kann, um das Anhaften von zu verdichtendem Material, insbesondere Asphaltmaterial, zu unterbinden. Der Flüssigkeitstank 62 begrenzt somit die Kühlluft-Aufnahmeöffnung 64 am Hinterwagen 16 in der Bodenverdichter-Höhenrichtung H nach oben und in der Bodenverdichter-Querrichtung Q in beiden Richtungen, also nach rechts und nach links in Fig. 3. In der Bodenverdichter-Höhenrichtung H nach unten kann die Kühlluft-Eintrittsöffnung 64 durch einen Rahmen 66 des Hinterwagens 16 begrenzt sein.

Am Hinterwagen 16 ist ferner eine einen Außenumfangsbereich der Verdichterwalze 22 bereichsweise umgebendes und somit einen Walzenaufnahmeraum 68 für die Verdichterwalze 22 umgrenzende Walzenverkleidung 70 vorgesehen. Die Walzenverkleidung 70 erstreckt sich in Richtung der zur Zeichenebene der Figur 4 orthogonalen Walzendrehachse D der Verdichterwalze 22 im Wesentlichen über die gesamte Länge der Verdichterwalze 22 und begrenzt im Wesentlichen mit dem U-förmigen Flüssigkeitstank 62 einen Kühlluft-Strömungskanal 72, welcher von der dem Vorderwagen 14 zugewandten Vorderseite 74 des Hinterwagens 16 und der in diesem Bereich positionierten Kühlluft-Aufnahmeöffnung 64 zu einer an einer vom Vorderwagen 14 abgewandten Hinterseite 76 des Hinterwagens 16 positionierten Kühlluft-Abgabeöffnung 78 führt.

Die an der Hinterseite 56 des Vorderwagens 14 in Richtung auf die Vorderseite 74 des Hinterwagens 16 zu ausströmende Kühlluft K tritt somit im Bereich der Kühlluft-Aufnahmeöffnung 64 in den Kühlluft-Strömungskanal 72 ein, strömt im Wesentlichen zwischen dem Flüssigkeitstank 62 und der Walzenverkleidung 70 hindurch in Richtung zu der an der Hinterseite 76 des Hinterwagens 16 positionierten Kühlluft-Abgabeöffnung 78 und verlässt dort den Hinterwagen 14 bzw. den Bodenverdichter 10 in einem Bereich über der Verdichterwalze 22 und im Wesentlichen mit einer in der Bodenverdichter-Längsrichtung L bzw. schräg nach oben gerichteten Strömungsrichtung.

Durch diese Strömungsführung wird dafür gesorgt, dass im Wesentlichen die gesamte den Vorderwagen 14 durchströmende Kühlluft K auch den Hinterwagen 16 durchströmt und somit in Abstand zum Bedienstand 18, welcher das Kühlerpaket 58 in der Bodenverdichter-Längsrichtung L im Wesentlichen vollständig überlappen kann, aus dem Bodenverdichter 10 austritt. Es kann somit vermieden werden, dass vergleichsweise warme Kühlluft K in den Bereich des Bedienstandes 18 gelangt, auch wenn der Bodenverdichter 10 sich derart bewegt, dass der Hinterwagen 16 der in der dann vorhanden Bewegungsrichtung vorangehende Systembereich und der Vorderwagen 14 der nachlaufende Systembereich sind.

## Patentansprüche

1. Selbstfahrender Bodenverdichter, umfassend einen Vorderwagen (14) und einen zum Lenken des Bodenverdichters (10) mit dem Vorderwagen (14) schwenkbar verbundenen, in einer Bodenverdichter-Längsrichtung (L) auf den Vorderwagen (14) folgenden Hinterwagen (16), wobei an dem Vorderwagen (14) ein Antriebsaggregat und ein Kühlsystem (24) vorgesehen sind, wobei das Kühlsystem (24) wenigstens einen von einem zu kühlenden Medium und von Kühlluft (K) durchströmbaren Kühler (30, 32, 34) und ein Kühlluftgebläse (60) umfasst, wobei wenigstens ein Kühler (30, 32, 34) an einer dem Hinterwagen (16) zugewandten Hinterseite (56) des Vorderwagens (14) derart angeordnet ist, dass den wenigstens einen an der dem Hinterwagen (16) zugewandten Hinterseite (56) des Vorderwagens (14) angeordneten Kühler (30, 32, 34) durchströmende Kühlluft (K) aus dem wenigstens einen an der dem Hinterwagen (16) zugewandten Hinterseite (56) des Vorderwagens (14) angeordneten Kühler (30, 32, 34) in Richtung auf den Hinterwagen (16) zu austritt, wobei an einer dem Vorderwagen (14) zugewandten Vorderseite (74) des Hinterwagens (16) wenigstens eine Kühlluft-Aufnahmeöffnung (64) zur Aufnahme der in Richtung auf den Hinterwagen (16) zu austretenden Kühlluft (K) vorgesehen ist, und wobei an einer von dem Vorderwagen (14) im Wesentlichen abgewandten Hinterseite (76) des Hinterwagens (16) wenigstens eine Kühlluft-Abgabeöffnung (78) zur Abgabe der an der wenigstens einen Kühlluft-Aufnahmeöffnung (64) aufgenommenen Kühlluft (K).

2. Bodenverdichter nach Anspruch 1,
**dadurch gekennzeichnet, dass** der wenigstens eine an der dem Hinterwagen (16) zugewandten Hinterseite (56) des Vorderwagens (14) angeordnete Kühler (30, 32, 34) in einer zur Bodenverdichter-Längsrichtung (L) im Wesentlichen orthogonalen Bodenverdichter-Querrichtung (Q) im Wesentlichen zentral am Vorderwagen (14) angeordnet ist.

3. Bodenverdichter nach Anspruch 1 oder 2,
**dadurch gekennzeichnet, dass** die den wenigstens einen an der dem Hinterwagen (16) zugewandten Hinterseite (56) des Vorderwagens (14) angeordneten Kühler (30, 32, 34) durchströmende Kühlluft (K) im Wesentlichen in der Bodenverdichter-Längsrichtung (L) aus dem wenigstens einen an der dem Hinterwagen (16) zugewandten Hinterseite (56) des Vorderwagens (14) angeordneten Kühler (30, 32, 34) in Richtung auf den Hinterwagen (16) zu austritt.

4. Bodenverdichter nach einem der Ansprüche 1-3,
**dadurch gekennzeichnet, dass** das Kühlsystem (24) eine Mehrzahl von von der Kühlluft (K) durchströmbaren Kühlern (30, 32, 34) umfasst, und dass wenigstens zwei zum Kühlen unterschiedlicher Medien vorgesehene Kühler (30, 32, 34) des Kühlsystems (24) an der dem Hinterwagen (16) zugewandten Hinterseite (56) des Vorderwagens (14) in der Bodenverdichter-Längsrichtung (L) derart aufeinander folgend angeordnet sind, dass die Kühlluft (K) diese Kühler (30, 32, 34) im Wesentlichen in Richtung der Bodenverdichter-Längsachse (L) nacheinander durchströmt.

5. Bodenverdichter nach Anspruch 4,
**dadurch gekennzeichnet, dass** die wenigstens zwei zum Kühlen unterschiedlicher Medien vorgesehenen Kühler (30, 32,34) umfassen:
- einen Kühlflüssigkeit-Kühler zum Kühlen von Antriebsaggregat-Kühlflüssigkeit,
oder/und
- einen Öl-Kühler zum Kühlen von Antriebsaggregat-Öl,
oder/und
- einen Ladeluft-Kühler zum Kühlen von Antriebsaggregat-Ladeluft, oder/und
- einen Hydrauliköl-Kühler zum Kühlen von Hydrauliköl oder/und
- einen Kraftstoff-Kühler zum Kühlen von Antriebsaggregat-Kraftstoff.

6. Bodenverdichter nach einem der Ansprüche 1-5,
**dadurch gekennzeichnet, dass** das Kühlsystem (24) ein, in der Bodenverdichter-Längsrichtung (L) auf den wenigstens einen an der dem Hinterwagen (16) zugewandten Hinterseite (56) des Vorderwagens (14) angeordneten Kühler (30, 32, 34) folgend, stromaufwärts des wenigstens einen an der dem Hinterwagen (16) zugewandten Hinterseite (56) des Vorderwagens (14) angeordneten Kühlers (30, 32, 34) angeordnetes Kühlluftgebläse (60) umfasst.

7. Bodenverdichter nach Anspruch 6, sofern auf Anspruch 4 rückbezogen, **dadurch gekennzeichnet, dass** das Kühlluftgebläse (60) stromaufwärts der wenigstens zwei zum Kühlen unterschiedlicher Medien vorgesehenen, an der dem Hinterwagen (16) zugewandten Hinterseite (56) des Vorderwagens (14) in der Bodenverdichter-Längsrichtung (L) aufeinander folgend angeordneten Kühler (30, 32, 34) angeordnet ist.

8. Bodenverdichter nach einem der Ansprüche 1-7,
**dadurch gekennzeichnet, dass** an dem Hinterwagen (16) ein Flüssigkeitstank (62) vorgesehen ist, und dass:
- der Flüssigkeitstank (62) die wenigstens eine Kühlluft-Aufnahmeöffnung (64) in einer zur Bodenverdichter-Längsrichtung (L) im Wesentlichen orthogonalen Bodenverdichter-Höhenrichtung (H) oder/und in wenigstens einer Richtung, vorzugsweise beiden Richtungen, in der Bodenverdichter-Querrichtung (Q) wenigstens bereichsweise begrenzt,
oder/und
- der Flüssigkeitstank (62) die wenigstens eine Kühlluft-Abgabeöffnung (78) in der Bodenverdichter-Höhenrichtung (H) oder/und in wenigstens einer Richtung, vorzugsweise beiden Richtungen, in der Bodenverdichter-Querrichtung (Q) wenigstens bereichsweise begrenzt.

9. Bodenverdichter nach einem der Ansprüche 1-8,
**dadurch gekennzeichnet, dass** an dem Hinterwagen (16) ein von der wenigstens einen Kühlluft-Aufnahmeöffnung (64) zu der wenigstens einen Kühlluft-Abgabeöffnung (78) führender Kühlluft-Strömungskanal (72) vorgesehen ist, und dass der Flüssigkeitstank (62) den Kühlluft-Strömungskanal (72) in der Bodenverdichter-Höhenrichtung (H) oder/und in wenigstens einer Richtung, vorzugsweise beiden Richtungen, in der Bodenverdichter-Querrichtung (Q) wenigstens bereichsweise begrenzt.

10. Bodenverdichter nach Anspruch 9,
**dadurch gekennzeichnet, dass** an dem Hinterwagen (16) eine Verdichterwalze (22) um eine zur Bodenverdichter-Längsrichtung (L) im Wesentlichen orthogonale Walzendrehachse (D) drehbar angeordnet ist, wobei an dem Hinterwagen (16) eine in Umfangsrichtung um die Walzendrehachse (D) sich entlang eines Teils eines Außenumfangs der Verdichterwalze (22) und sich in Richtung der Walzendrehachse (D) erstreckende, einen Walzenaufnahmeraum (68) umgrenzende Walzenverkleidung (70) vorgesehen ist, und dass die Walzenverkleidung (70) den Kühlluft-Strömungskanal (72) in Richtung auf die Verdichterwalze (22) zu begrenzt.

11. Bodenverdichter nach einem der Ansprüche 1-10,
**dadurch gekennzeichnet, dass** an dem Vorderwagen (14) an im Wesentlichen quer zur Bodenverdichter-Längsrichtung (L) orientierten Seitenrandbereichen (40, 42) Kühlluft-Eintrittsöffnungen (46) vorgesehen sind.

12. Bodenverdichter nach Anspruch 11,
**dadurch gekennzeichnet, dass** an dem Vorderwagen (14) ein Bedienstand (18) vorgesehen ist.

13. Bodenverdichter nach Anspruch 12,
**dadurch gekennzeichnet, dass** der Bedienstand (18) den wenigstens einen an der dem Hinterwagen (16) zugewandten Hinterseite (56) des Vorderwagens (14) angeordneten Kühler (30, 32, 34) in der Bodenverdichter-Längsrichtung (L) wenigstens bereichsweise überlappt.

14. Bodenverdichter nach Anspruch 11 oder 12, sofern auf Anspruch 11 rückbezogen,
**dadurch gekennzeichnet, dass** wenigstens ein Teil der Kühlluft-Eintrittsöffnungen (46) im Bereich von zu dem Bedienstand (18) führenden Trittaussparungen (44) vorgesehen ist.
